# EUROPEAN PATENT APPLICATION

(11) **EP 2 518 781 A2**
(43) Date of publication of application: **31.10.2012**
(21) Application number: 12165805.8
(22) Date of filing: 26.04.2012
(51) Int. Cl.: H01L 31/058

(54) **Hybrid solar concentration device**

(30) Priority: 29.04.2011 US 201113097714
(71) Applicant: General Electric Company, Schenectady, NY 12345 (US)
(72) Inventor: Chatterjee, Aveek, 560095 Karnataka (IN); Bhakta, Aditya, Niskayuna, NY New York 12309 (US); Ghosh, Sampa, Niskayuna, NY New York 12309 (US); Govindasamy, Rakesh, Niskayuna, NY New York 12309 (US); Krishnan, Devanathan, Niskayuna, NY New York 12309 (US)
(74) Representative: Illingworth-Law, William Illingworth

(57) **Abstract**

In one embodiment, the present invention provides a hybrid solar concentration device comprising: (a) a solar collector configured to direct solar radiation to a photovoltaic cell and a heat exchanger; (b) a heat exchanger configured to heat a working fluid with a first energy component of the solar radiation; and (c) a photovoltaic cell configured to generate electricity from a second energy component of the solar radiation. Also provided are systems for generating electric power comprising one or more of the novel hybrid solar concentration devices and methods for generating electric power using such systems.

## Description

### BACKGROUND

This invention relates to hybrid solar concentration devices, systems containing such devices and methods of using such devices and systems.

Photovoltaic cells operate by converting light, typically sunlight, into electricity and are widely available at relatively low cost. As such, the photovoltaic effect, known since its discovery by Becquerel in the first half of the nineteenth century, offers a promising basis for generating electric power needed by modem societies from a nearly inexhaustible natural resource, solar radiation.

Much human effort and ingenuity have been expended in the development of photovoltaic cells characterized by improved operating efficiencies relative to earlier prototypes. One challenge in this area is to make more complete use of the energy contained in the sunlight incident upon photovoltaic cell while controlling the operating temperature of the cell. The present invention provides enhancements over purely photovoltaic devices through the more complete utilization of the energy contained in sunlight.

### BRIEF DESCRIPTION

In one embodiment, the present invention provides a hybrid solar concentration device comprising: (a) a solar collector configured to direct solar radiation to a photovoltaic cell and a heat exchanger; (b) a heat exchanger configured to heat a working fluid with a first energy component of the solar radiation; and (c) a photovoltaic cell configured to generate electricity from a second energy component of the solar radiation.

In another embodiment, the present invention provides a system for generating electric power comprising: (a) a hybrid solar concentration device comprising a solar collector configured to direct solar radiation to a photovoltaic cell and a heat exchanger; the heat exchanger being configured to heat a working fluid with a first energy component of the solar radiation; and the photovoltaic cell being configured to generate electricity from a second energy component of the solar radiation; and (b) a work extraction device in fluid communication with the heat exchanger configured to extract work from a heated working fluid.

In yet another embodiment, the present invention provides a method for generating electric power comprising: (a) directing a first energy component of solar radiation from a solar collector to a heat exchanger configured to heat a working fluid and producing a heated working fluid; (b) directing a second energy component of solar radiation to a photovoltaic cell configured to generate electricity and producing electricity; (c) conveying the heated working fluid to a work extraction device configured to extract work from the heated working fluid and producing mechanical energy and a spent working fluid; and (d) recycling the spent working fluid to the heat exchanger.

In yet still another embodiment, the present invention provides a system for generating electric power comprising: (a) a solar collector comprising a plurality of linear Fresnel reflectors configured to direct solar radiation to a photovoltaic cell and a heat exchanger; (b) a heat exchanger comprising a plurality of light transmissive tubes configured to heat an organic working fluid with an infrared radiation component of the solar radiation; and (c) a photovoltaic cell configured to generate DC power from a visible light component of the solar radiation; (d) an inverter configured to convert the DC power generated by the photovoltaic cell into AC power; (e) a work extraction device configured to convert work from a heated working fluid produced by the heat exchanger into electric power, and (f) a heat extraction device configured to extract heat from a spent working fluid, said heat extraction device being in fluid communication with the work extraction device and the heat exchanger; wherein the system for generating electric power is configured such that both electric power produced by photovoltaic cell and the work extraction device may be delivered to an electric power grid.

### BRIEF DESCRIPTION OF THE DRAWING FIGURES

Various features, aspects, and advantages of the present invention will become better understood when the following detailed description is read with reference to the accompanying drawings in which like characters may represent like parts throughout the drawings. Unless otherwise indicated, the drawings provided herein are meant to illustrate key inventive features of the invention. These key inventive features are believed to be applicable in a wide variety of systems which comprising one or more embodiments of the invention. As such, the drawings are not meant to include all conventional features known by those of ordinary skill in the art to be required for the practice of the invention.
Fig. 1 illustrates a hybrid solar concentration device in accordance with an embodiment of the invention.
Fig. 2 illustrates a hybrid solar concentration device in accordance with an embodiment of the invention.
Fig. 3 illustrates a hybrid solar concentration device in accordance with an embodiment of the invention.
Fig. 4 illustrates a hybrid solar concentration device in accordance with an embodiment of the invention.
Fig. 5 illustrates a system for generating electric power in accordance with an embodiment of the invention.
Fig. 6 illustrates a system for generating electric power in accordance with an embodiment of the invention.
Fig.s 6a, 6b and 6c illustrate components of a system for generating electric power in accordance with an embodiment of the invention.
Fig. 7 illustrates a method of generating electric power in accordance with an embodiment of the invention.

### DETAILED DESCRIPTION

In the following specification and the claims, which follow, reference will be made to a number of terms, which shall be defined to have the following meanings.

The singular forms "a", "an", and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As noted, in one embodiment, the present invention provides a hybrid solar concentration device comprising: (a) a solar collector configured to direct solar radiation to a photovoltaic cell and a heat exchanger; (b) a heat exchanger configured to heat a working fluid with a first energy component of the solar radiation; and (c) a photovoltaic cell configured to generate electricity from a second energy component of the solar radiation.

The devices provided by the present invention are referred to as hybrid solar concentration devices, and are "hybrids" in the sense that they combine elements of solar energy concentration using photovoltaic cells with solar energy concentration using closed loop thermal energy recovery cycles, for example an organic Rankine cycle. Thus, solar radiation from a solar radiation source is collected by a solar collector which directs the solar radiation to both a photovoltaic cell and a heat exchanger. In one embodiment, the heat exchanger and the photovoltaic cell are configured such that solar radiation collected at the solar collector is directed first through a light transmissive heat exchanger which contains a working fluid. A first energy component of the solar radiation, typically a portion of the infrared energy content of the solar radiation, is transferred to and heats the working fluid, the working fluid becoming a heated working fluid. A second energy component of the solar radiation, typically light in the visible portion of the solar spectrum is transmitted by the light transmissive heat exchanger and encounters the photovoltaic cell where at least a portion of the light energy incident upon the photovoltaic cell is converted to electricity. The heat exchanger and the photovoltaic cell may be separated by a gap which may be configured such that the operating temperature of the photovoltaic cell may be controlled to within acceptable limits, typically less than about 50°C. In one embodiment, the heat exchanger and the photovoltaic cell are separated by a gap the dimensions of which may be varied. Under such circumstances, the gap is said to be variable.

In another embodiment, the heat exchanger and the photovoltaic cell are configured such that solar radiation collected at the solar collector is directed first to the photovoltaic cell. At least a portion of the visible light, at times herein referred to as the second energy component of the solar radiation, incident upon the photovoltaic cell is converted to electricity. A first energy component of the solar radiation, typically comprised of infrared energy, traverses the photovoltaic cell and encounters the heat exchanger and the working fluid. Thus, with respect to transmission of infrared radiation at least, the photovoltaic cell can be said to be light transmissive. A portion of the infrared energy content of the solar radiation, is transferred to and heats the working fluid, the working fluid being transformed into a heated working fluid.

The hybrid solar concentration devices provided by the present invention are configured such that the working fluid is circulated in a closed loop energy recovery cycle wherein heat absorbed by the working fluid is used to produce mechanical energy which may in turn be used to produce electricity. When configured such that solar radiation collected by the solar collector first encounters the photovoltaic cell, the heat exchanger serves to cool the photovoltaic cell by removing heat from it. This can be contrasted with devices in which the solar radiation collected by the solar collector first encounters the heat exchanger and controls the temperature of the photovoltaic cell by removing infrared radiation from the solar radiation prior to its contact with the photovoltaic cell. The heat exchanger and the photovoltaic cell may be separated by a gap which may be variable, but typically, in configurations in which the solar radiation first encounters the photovoltaic cell, any gap between the photovoltaic cell and the heat exchanger is kept to a minimum in order to promote close thermal contact between the photovoltaic cell and the heat exchanger which cools it.

Solar collectors and photovoltaic cells are widely available articles of commerce and are well known to those of ordinary skill in the art. In one embodiment, the solar collector comprises one or more mirror surfaces. In another embodiment, the solar collector comprises one or more parabolic reflectors. In one embodiment, hybrid solar concentration device provided by the present invention comprises a plurality of solar collectors. In one embodiment, the hybrid solar concentration device provided by the present invention comprises a plurality of photovoltaic cells. In yet another embodiment, the hybrid solar concentration device provided by the present invention comprises both a plurality of solar collectors and a plurality of photovoltaic cells. Suppliers of solar collectors and/or photovoltaic cells include Sunpower, Inc.; Unisolar, Inc.; Sharp, Inc.; First Solar, Inc.; Emcore, Inc.; Spectrolab, Inc.; and Azurspace Solar Power, GMBH.

The heat exchanger used in the practice of one or more aspects of the present invention is typically a light transmissive conduit, for example a tube, containing a working fluid. In embodiments wherein the solar radiation first traverses the heat exchanger before encountering the photovoltaic cell, the distance the solar radiation travels through the heat exchanger before emerging from it (sometimes referred to herein as the heat exchanger path length) must be controlled in order to provide for adequate light intensity incident upon the photovoltaic cell. In one embodiment, the heat exchanger path length is less than about 5 centimeters. In another embodiment, the heat exchanger path length is less than about 2 centimeters. In yet another embodiment, the heat exchanger path length is less than about 1 centimeters. In yet still another embodiment, the heat exchanger path length is less than about 50 millimeters.

In one embodiment, the heat exchanger used in the practice of one or more aspects of the present invention comprises a light transmissive tube. In another embodiment, the heat exchanger used in the practice of one or more aspects of the present invention comprises a plurality of light transmissive tubes. In one embodiment, the heat exchanger used in the practice of one or more aspects of the present invention comprises one or more channels configured to accommodate a working fluid and wherein the channel on average contributes about 20 millimeters to the heat exchanger path length. In one embodiment, the heat exchanger used in the practice of one or more aspects of the present invention comprises one or more half-cylinder shaped tubes.

As noted, the hybrid solar concentration devices provided by the present invention are configured such that the working fluid is circulated in a closed loop energy recovery cycle wherein heat absorbed by the working fluid is used to produce mechanical energy which may in turn be used to produce electricity. Thus, the heat exchanger component is integrated into the closed loop energy recovery cycle, which may be, for example, an organic Rankine cycle. Typically, in a closed loop energy recovery cycle a working fluid is heated using an available heat source to produce a heated working fluid. The heated working fluid is then contacted with a work extraction device where kinetic energy from the heated working fluid is converted into mechanical energy which may be used for a variety of purposes including the generation of electric power. The working fluid after contacting the work extraction device is at times herein referred to as a spent working fluid since it contains less energy than the heated working fluid.

The working fluid may any suitable working fluid; for example ammonia, water, air, carbon dioxide, cyclopentane, butane, isobutane, and hexane. When the working fluid is ammonia, the closed loop energy recovery cycle may be referred to as a Kalina cycle. When the working fluid is water the closed loop energy recovery cycle may be referred to as a Rankine cycle. When the working fluid is an organic species such as cyclopentane the closed loop energy recovery cycle may be referred to as an organic Rankine cycle.

Additional embodiments of the present invention include a system for generating electric power and a method of generating electric power. In one embodiment, the present invention provides a system for generating electric power comprising (a) a hybrid solar concentration device comprising: a solar collector configured to direct solar radiation to a photovoltaic cell and a heat exchanger; the heat exchanger being configured to heat a working fluid with a first energy component of the solar radiation; and the photovoltaic cell being configured to generate electricity from a second energy component of the solar radiation; and (b) a work extraction device in fluid communication with the heat exchanger configured to extract work from a heated working fluid.

A variety of work extraction devices are known to those of ordinary skill in the art and are commercially available; for example turboexpanders, tubogenerators, turbines and the like. In one embodiment, the work extraction device used in the practice of one or more aspects of the present invention is a turbine-generator comprising a turbine component through which the working fluid is expanded to generate mechanical power and a generator component which converts the mechanical power from the turbine component into electric power.

In one embodiment, the present invention provides a method for generating electric power comprising (a) directing a first energy component of solar radiation from a solar collector to a heat exchanger configured to heat a working fluid and producing a heated working fluid; (b) directing a second energy component of solar radiation to a photovoltaic cell configured to generate electricity and producing electricity; (c) conveying the heated working fluid to a work extraction device configured to extract work from the heated working fluid and producing mechanical energy and a spent working fluid (spent here means that at least a portion of the energy of the heated working fluid has been extracted by the work extraction device); and (d) recycling the spent working fluid to the heat exchanger. Those of ordinary skill in the art and having read this disclosure will understand that in the practice of the method of the present invention for generating electric power step (a) may in one embodiment, precede step (b), and in an alternate embodiment, step (b) may precede step (a). In one embodiment, the method of generating electric power provided by the present invention further comprises a step (e) in which additional heat is removed from the spent working fluid to produce a second spent working fluid characterized by a temperature lower than the temperature of the spent working fluid. In one embodiment, this step (e) is carried out in a condenser integrated into the closed loop energy recovery cycle.

A work extraction device such as the turbine-generator described above may be configured to provide AC power to an electric power grid. Photovoltaic cells, however, produce relatively low voltage, Direct Current (DC) power which must be converted into Alternating Current (AC) power before it can be supplied to an electric power grid. Thus, in one embodiment, the method provided by the present invention further comprises a step (f) in which DC power produced by the photovoltaic cell is converted into AC power. In one embodiment, DC power produced by the photovoltaic cell is converted into AC power using an inverter.

The method of generating electric power provided by the present invention employs one or more hybrid solar concentration devices and systems also provided by the present invention. Such hybrid solar concentration devices and systems may comprise one or more solar collectors, one or more photovoltaic cells, one or more heat exchangers, one or more working fluids, one or more work extraction devices, one or more fluid pumps, one or more condensers, and one or more inverters, among the various components of the hybrid solar concentration device. In one embodiment, the method of generating electric power provided by the present invention employs a solar collector comprising a plurality of reflectors. Such reflectors may be used to collect and direct solar radiation and components thereof during operation.

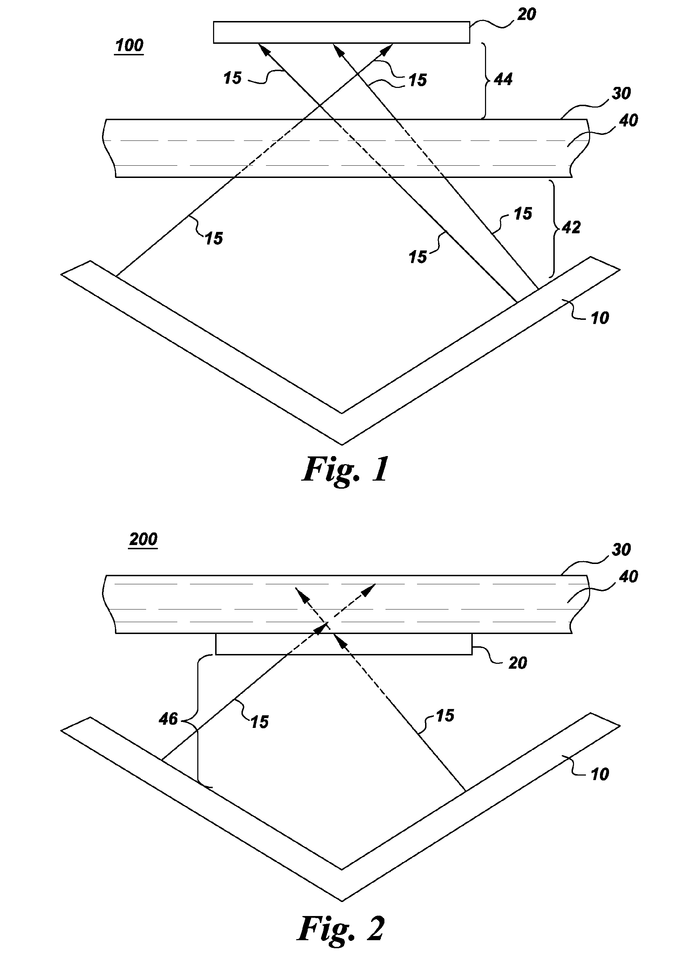

Referring to FIG. 1, the figure illustrates a hybrid solar concentration device 100 provided by the present invention comprising a solar collector 10 configured to direct solar radiation 15 to a photovoltaic cell 20 and a heat exchanger 30. The heat exchanger 30 is configured to heat a working fluid 40 with a first energy component of solar radiation 15, typically an infrared component of the solar radiation. When in operation, in the embodiment shown, at least a portion of solar radiation 15 traverses heat exchanger 30 which is advantageously light transmissive in portions of it exposed to incident solar radiation from the solar radiation collector. At least a portion of the solar radiation which traverses the heat exchanger impinges upon a photovoltaic cell where it is converted to electric power. As noted, heat exchanger 40 is integrated into a closed loop energy recovery cycle not shown here (See Fig.s 5, 6, 6a and 6b). Gap 42 separates the solar collector 10 from the heat exchanger 30 and gap 44 separates heat exchanger 30 from the photovoltaic cell 20. As noted earlier in this disclosure, gap sizes may be used to control the temperature of the photovoltaic cell.

Referring to FIG. 2, the figure illustrates a hybrid solar concentration device 200 provided by the present invention. In contrast to Fig. 1 wherein the heat exchanger 30 is light transmissive and configured such that at least a portion of the solar radiation 15 directed from the solar collector traverses the heat exchanger prior to encountering the photovoltaic cell, in the embodiment shown in Fig. 2 the photovoltaic cell is light transmissive with respect to at least a portion of the solar radiation 15 and the photovoltaic cell is configured such that at least a portion of the solar radiation directed from the solar collector traverses the photovoltaic cell 20 prior to encountering the heat exchanger 30. As in Fig. 1 the heat exchanger is configured to heat a working fluid with a first energy component of the solar radiation. In addition, the heat exchanger is integrated into a closed loop energy recovery cycle (not shown). Gap 46 defines the distance between the solar collector and the photovoltaic cell and may be varied at need in order to control the temperature of the photovoltaic cell during operation. In the embodiment shown, no gap separates the heat exchanger 30 from the photovoltaic cell since in this configuration close thermal contact between the heat exchanger and the photovoltaic cell is desirable.

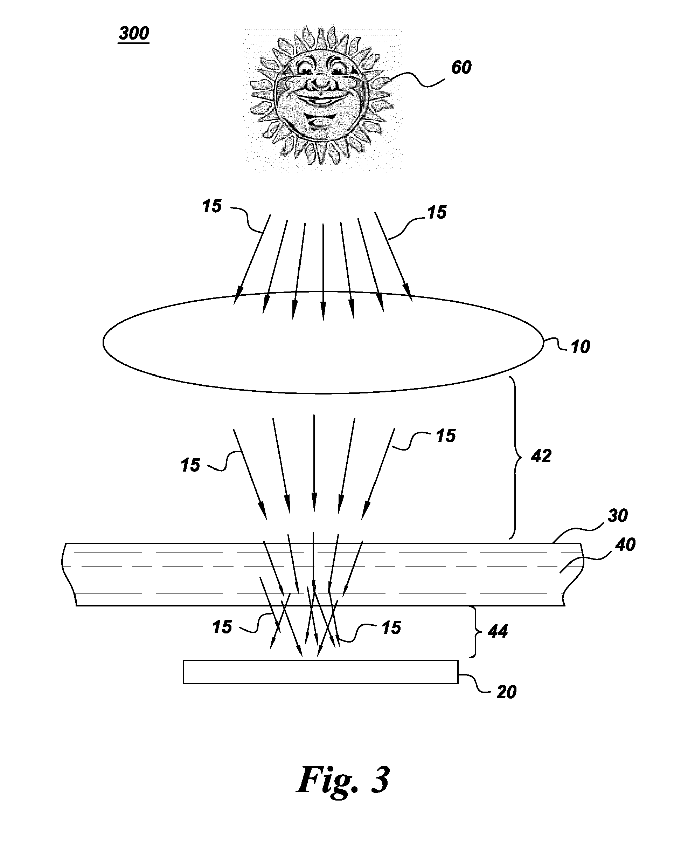

Referring to FIG. 3, the figure illustrates a hybrid solar concentration device 300. Device 300 comprises a solar collector 10 which is a lens concentrator configured to collect and direct solar radiation 15 from a source of solar radiation 60 across a gap 42, the gap between the solar collector 10 and heat exchanger 30. Heat exchanger 30 is configured to heat a working fluid 40 to produce a heated working fluid (not shown). Heat exchanger 30 is light transmissive and is integrated into a closed loop energy recovery cycle (not shown). In operation, a first energy component of solar radiation 15 heats the working fluid 40. Solar radiation then exits the heat exchanger and traverses gap 44, the gap between the heat exchanger and the photovoltaic cell 20, to impinge upon the photovoltaic cell where a second energy component of the solar radiation is converted into electric power. Gaps 42 and 44 may be varied to optimize the performance of the hybrid solar concentration device. In one embodiment, gaps 42 and 44 may be varied in order to optimize the performance of the hybrid solar concentration device as a function of the optimal achievable temperature of the photovoltaic cell, typically a temperature of less than about 50°C. In another embodiment, gaps 42 and 44 may be varied in order to optimize the performance of the hybrid solar concentration device as a function of the prevailing weather conditions.

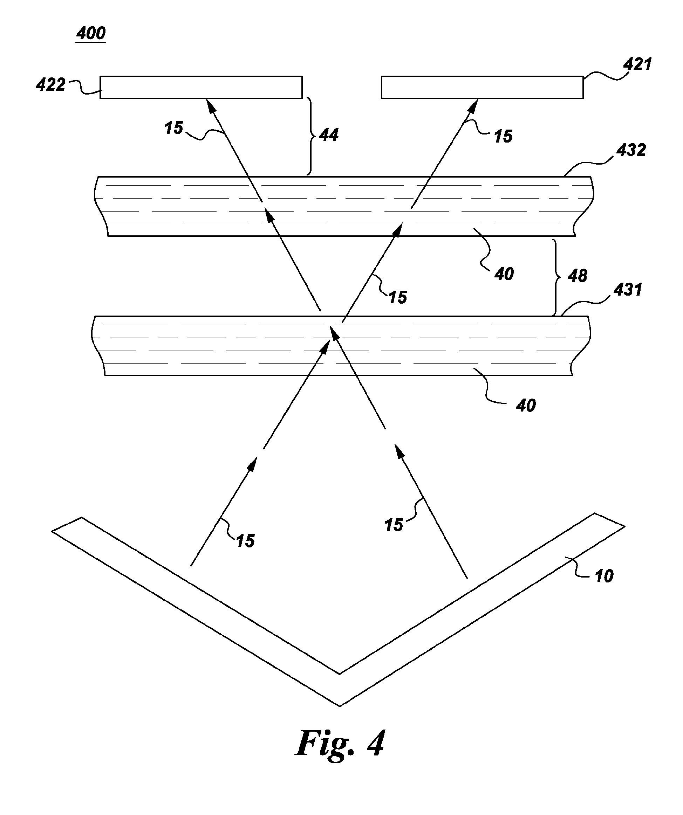

Referring to FIG. 4, the figure illustrates a hybrid solar concentration device 400 comprising a plurality of heat exchangers and photovoltaic cells. Thus the hybrid solar concentration device 400 comprises a solar collector 10 configured to collect and direct solar radiation 15 through a first heat exchanger 431 and a second heat exchanger 432. Heat exchangers 431 and 432 are configured to heat a working fluid 40 and are separated in space by a gap 48, the gap between the first heat exchanger and the second heat exchanger. Heat exchangers 431 and 432 are light transmissive and are integrated into a closed loop energy recovery cycle, in one embodiment, an organic Rankine cycle. Hybrid solar concentration device 400 comprises a pair of photovoltaic cells 421 and 422 separated from the second heat exchanger 432 by gap 44.

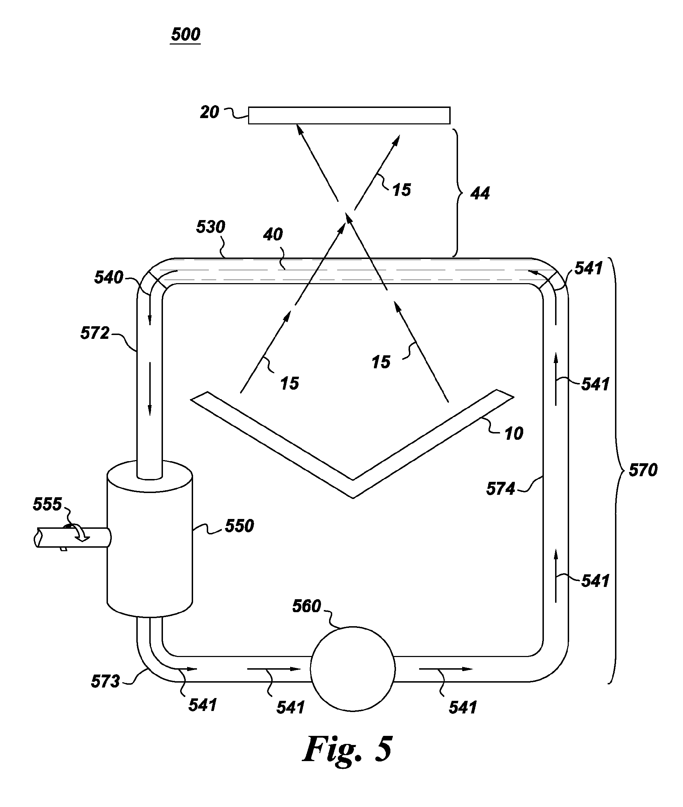

Referring to FIG. 5, the figure illustrates a system for generating electric power 500. The system comprises a solar collector 10 configured to collect solar radiation 15 and direct it to a light transmissive portion 530 of a closed loop energy recovery cycle 570 and a photovoltaic cell 20. Light transmissive portion 530 corresponds to the heat exchanger 30 shown in Fig.s 1-4. The closed loop energy recovery cycle 570 comprises a work extraction device 550 configured to produce mechanical energy 555 which may be used for a variety of purposes, including the generation of electric power. Such a work extraction device is said to be configured to extract work from the heated working fluid 540 during operation. As noted, the closed loop energy recovery cycle 570 comprises a light transmissive portion 530 which is configured to heat a working fluid 40. Light transmissive portion 530 is linked to other elements (e.g. working fluid pump 560 and work extraction device 550) of the closed loop energy recovery cycle via conduit sections 572-574. The closed loop energy recovery cycle 570 is configured such that during operation the working fluid 40 within the light transmissive portion of the energy recovery cycle is heated by the solar radiation 15. Heated working fluid 540 emerges from portion 530 and passes by conduit section 572 to work extraction device 550 where at least a portion of the energy of the heated working fluid is converted into mechanical energy. The working fluid which exits the work extraction device contains less energy than the heated working fluid 540 and is thus referred to as spent working fluid 541. Spent working fluid 541 is in fluid communication with working fluid pump 560 via conduit section 573. Working fluid pump 560 impels the spent working fluid via conduit section 574 toward light transmissive portion 530 of the energy recovery cycle. As the spent working fluid absorbs energy from solar radiation 15 it warms first to the temperature of working fluid 40. In the embodiment shown, the working fluid pump 560 effectively circulates the working fluid in all of its various forms (working fluid 40, heated working fluid 540, and spent working fluid 541) through the closed loop energy recovery cycle. Solar radiation 15 from which a first energy component has been absorbed by working fluid 40 emerges from light transmissive portion 530, traverses gap 44 and impinges upon photovoltaic cell 20 where a second energy component of the solar radiation is converted to electricity.

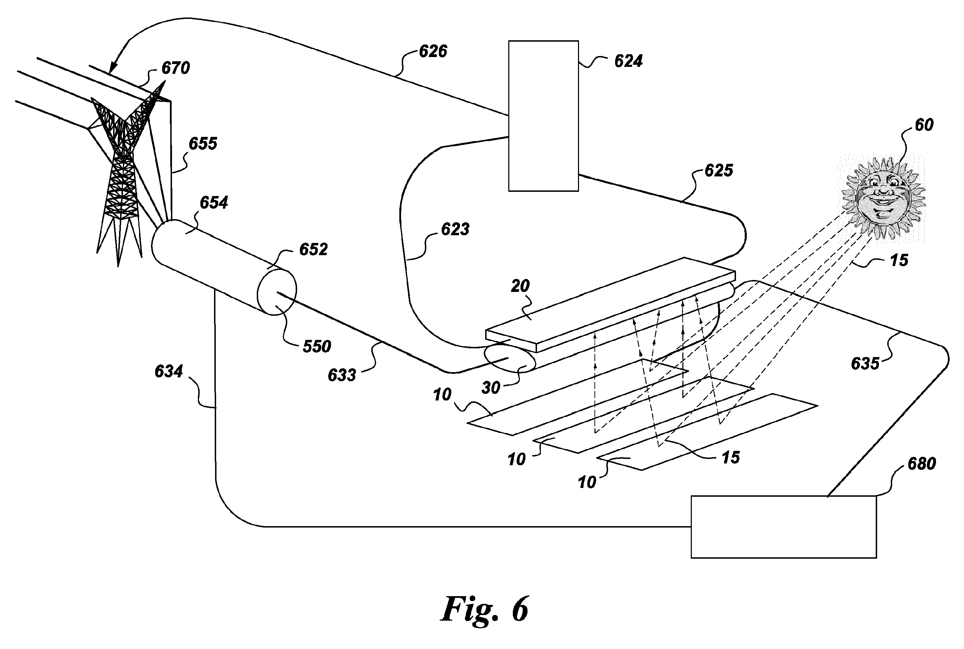

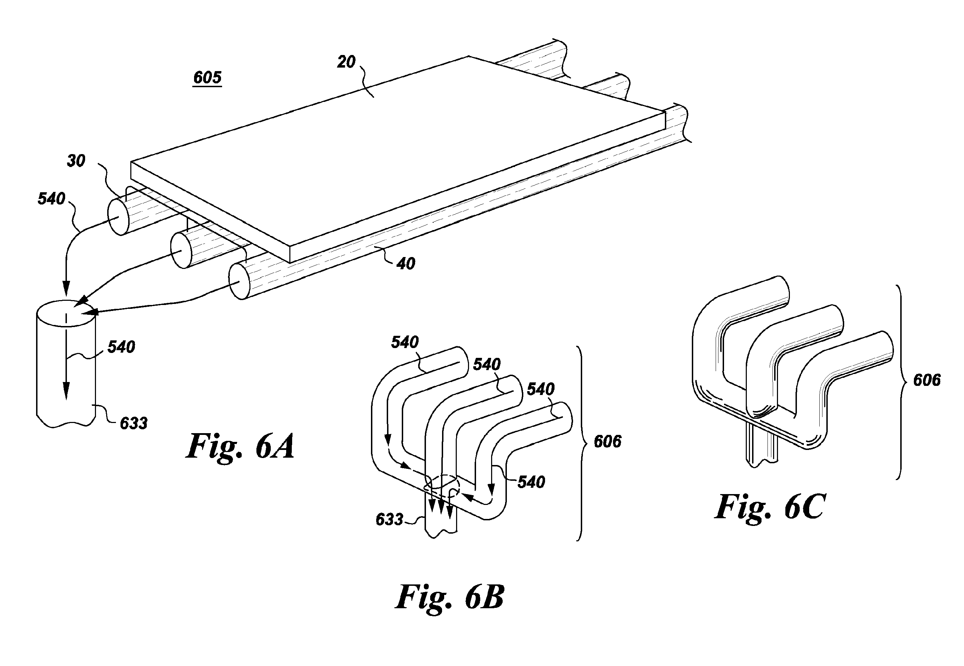

Referring to FIG. 6, the figure illustrates a system for generating electric power 600, the system being configured to deliver electric power to an electric power grid. The system 600 comprises a plurality of solar collectors 10 configured to collect and direct solar radiation 15 from a source of solar radiation 60 to a plurality of heat exchangers 30 and a photovoltaic cell 20. Photovoltaic cell 20 is configured to produce DC electric power from a second energy component (not shown) of the solar radiation 15. The DC electric produced may be converted to AC electric power in inverter 624. Under such circumstances, the inverter is said to be configured to convert a DC input current to an AC output current. Electrical connections 623 and 625 link the photovoltaic cell to the inverter 624. The AC electric power so produced may be delivered to an electric power grid via AC power connection 626. In the embodiment shown, element 670 represents one or more electrical connections configured to link system 600 to an electric power grid.

Still referring to FIG. 6 and system 600, heat exchangers 30 are configured to heat a working fluid (not shown) and produce a heated working fluid (not shown) which is delivered to a work extraction device 550 comprising a turbine component 652 and a generator component 654. The work extraction device is configured such that a heated working fluid delivered via conduit 633 (also referred to as the conduit for heated working fluid) contacts the turbine component of work extraction device 652. At least a portion of the kinetic energy (not shown) of the heated working fluid is converted into mechanical energy which is used to drive the generator component 654 of work extraction device 550 and thereby produce AC electric power 655 which may be delivered to an electric power grid (not shown). Spent working fluid (not shown) exits the work extraction device and passes via conduit section 634 to a working fluid condenser 680 which further cools the spent working fluid. Conduit section 635 completes the closed loop energy recovery cycle and delivers the cooled spent working fluid to the heat exchangers 30. A working fluid pump (not shown) may be used to circulate the working fluid in its various forms through the closed loop energy recovery cycle into which the heat exchangers are integrated.

In one embodiment, the present invention provides a system for generating electric power of the type illustrated by FIG. 6 comprising: (a) a solar collector comprising a plurality of linear Fresnel reflectors configured to direct solar radiation to a photovoltaic cell and a heat exchanger; (b) a heat exchanger comprising a plurality of light transmissive tubes configured to heat an organic working fluid with an infrared radiation component of the solar radiation; (c) a photovoltaic cell configured to generate DC power from a visible light component of the solar radiation; (d) an inverter configured to convert the DC power generated by the photovoltaic cell into AC power; (e) a work extraction device configured to convert work from a heated working fluid produced by the heat exchanger into electric power; and (f) a heat extraction device configured to extract heat from a spent working fluid, said heat extraction device being in fluid communication with the work extraction device and the heat exchanger; wherein the system for generating electric power is configured such that both electric power produced by photovoltaic cell and the work extraction device may be delivered to an electric power grid.

Referring to FIG.s 6a and 6b, the figures illustrate components 605 of the heat exchangers and photovoltaic cell 20 shown in FIG. 6 and illustrate the integration of the heat exchangers into the closed loop energy recovery cycle. FIG. 6a shows the arrangement of the plurality of heat exchangers 30 with respect to photovoltaic cell 20 and conduit section 633 which transports heated working fluid 540 to the work extraction device 550. FIG. 6b exemplifies a connector 606 which may be used to link heat exchangers 30 to conduit section 633. FIG. 6c provides an alternate (solid object) view of the connector shown in FIG. 6b.

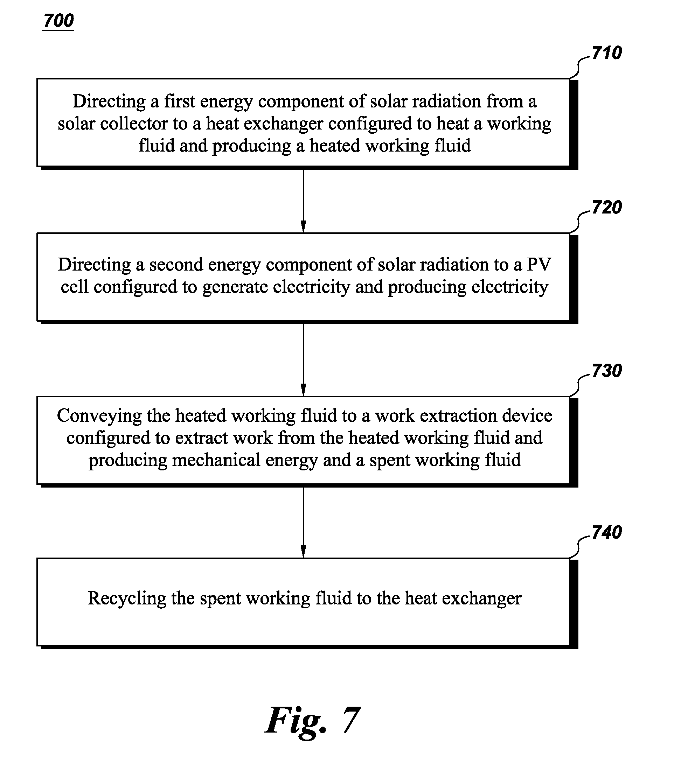

Referring to FIG. 7, the figure illustrates a method 700 for generating electricity from solar radiation. The method comprises a first step 710 comprising: directing a first energy component of solar radiation from a solar collector to a heat exchanger configured to heat a working fluid and producing a heated working fluid; a second step 720 comprising: directing a second energy component of solar radiation to a photovoltaic cell configured to generate electricity and producing electricity; a third step 730 comprising: conveying the heated working fluid to a work extraction device configured to extract work from the heated working fluid and producing mechanical energy and a spent working fluid; and a fourth step 740 comprising: recycling the spent working fluid to the heat exchanger.

The foregoing examples are merely illustrative, serving to illustrate only some of the features of the invention. The appended claims are intended to claim the invention as broadly as it has been conceived and the examples herein presented are illustrative of selected embodiments from a manifold of all possible embodiments. Accordingly, it is Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of' and "consisting of." Where necessary, ranges have been supplied, those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

Various aspects and embodiments of the present invention are defined by the following numbered clauses:
1. A hybrid solar concentration device comprising;
   (a) a solar collector configured to direct solar radiation to a photovoltaic cell and a heat exchanger;
   (b) a heat exchanger configured to heat a working fluid with a first energy component of the solar radiation; and
   (c) a photovoltaic cell configured to generate electricity from a second energy component of the solar radiation.
2. The hybrid solar concentration device according to clause 1, wherein the heat exchanger is light transmissive and is configured such that at least a portion of the solar radiation directed from the solar collector traverses the heat exchanger prior to encountering the photovoltaic cell.
3. The hybrid solar concentration device according to clause 1 or clause 2, wherein the photovoltaic cell is light transmissive and is configured such that at least a portion of the solar radiation directed from the solar collector traverses the photovoltaic cell prior to encountering the heat exchanger.
4. The hybrid solar concentration device according to any preceding clause, wherein the solar collector comprises one or more mirror surfaces.
5. The hybrid solar concentration device according to any preceding clause, wherein the solar collector comprises one or more parabolic reflectors.
6. The hybrid solar concentration device according to any preceding clause, wherein the heat exchanger comprises a plurality of light transmissive tubes.
7. The hybrid solar concentration device according to any preceding clause, wherein a gap separates the photovoltaic cell and the heat exchanger sufficient to limit the operating temperature of the photovoltaic cell.
8. The hybrid solar concentration device according to any preceding clause, wherein the gap is variable.
9. The hybrid solar concentration device according to any preceding clause, comprising a plurality of heat exchangers.
10. The hybrid solar concentration device according to any preceding clause, comprising a plurality of photovoltaic cells.
11. A system for generating electric power comprising:
   (a) a hybrid solar concentration device comprising: a solar collector configured to direct solar radiation to a photovoltaic cell and a heat exchanger; the heat exchanger being configured to heat a working fluid with a first energy component of the solar radiation; and the photovoltaic cell being configured to generate electricity from a second energy component of the solar radiation; and
   (b) a work extraction device in fluid communication with the heat exchanger configured to extract work from a heated working fluid.
12. The system for generating electric power according to any preceding clause, further comprising an inverter configured to convert a DC input current to an AC output current.
13. The system for generating electric power according to any preceding clause, which is configured for connection to an electric power grid.
14. The system for generating electric power according to any preceding clause, further comprising a working fluid condenser in fluid communication with the work extraction device and the heat exchanger.
15. The system according to any preceding clause, wherein the work extraction device is a turbine-generator.
16. A method of generating electric power comprising:
   (a) directing a first energy component of solar radiation from a solar collector to a heat exchanger configured to heat a working fluid and producing a heated working fluid;
   (b) directing a second energy component of solar radiation to a photovoltaic cell configured to generate electricity and producing electricity;
   (c) conveying the heated working fluid to a work extraction device configured to extract work from the heated working fluid and producing mechanical energy and a spent working fluid; and
   (d) recycling the spent working fluid to the heat exchanger.
17. The method according to any preceding clause, wherein step (a) precedes step (b).
18. The method according to any preceding clause, further comprising a step (e) removing additional heat from the spent working fluid to produce a second spent working fluid characterized by a temperature lower than the temperature of the spent working fluid.
19. The method according to any preceding clause, wherein step (e) is carried out in a condenser configured to remove heat from the spent working fluid and produce a second spent working fluid.
20. The method according to any preceding clause, further comprising a step (f) of converting DC power produced by the photovoltaic cell into AC power.
21. The method according to any preceding clause, wherein step (f) is carried out using an inverter.
22. The method according to any preceding clause, wherein the mechanical energy produced by the work extraction device is used to produce electricity.
23. The method according to any preceding clause, wherein work extraction device is a turbine-generator.
24. The method according to any preceding clause wherein the solar collector comprises a plurality of reflectors.
25. A system for generating electric power comprising:
   (a) a solar collector comprising a plurality of linear Fresnel reflectors configured to direct solar radiation to a photovoltaic cell and a heat exchanger;
   (b) a heat exchanger comprising a plurality of light transmissive tubes configured to heat an organic working fluid with an infrared radiation component of the solar radiation; and
   (c) a photovoltaic cell configured to generate DC power from a visible light component of the solar radiation;
   (d) an inverter configured to convert the DC power generated by the photovoltaic cell into AC power;
   (e) a work extraction device configured to convert work from a heated working fluid produced by the heat exchanger into electric power, and
   (f) a heat extraction device configured to extract heat from a spent working fluid, said heat extraction device being in fluid communication with the work extraction device and the heat exchanger;
wherein the system for generating electric power is configured such that both electric power produced by photovoltaic cell and the work extraction device may be delivered to an electric power grid.

## Claims

1. A hybrid solar concentration device comprising;
(a) a solar collector configured to direct solar radiation to a photovoltaic cell and a heat exchanger;
(b) a heat exchanger configured to heat a working fluid with a first energy component of the solar radiation; and
(c) a photovoltaic cell configured to generate electricity from a second energy component of the solar radiation.

2. The hybrid solar concentration device according to claim 1, wherein the heat exchanger is light transmissive and is configured such that at least a portion of the solar radiation directed from the solar collector traverses the heat exchanger prior to encountering the photovoltaic cell.

3. The hybrid solar concentration device according to claim 1 or claim 2, wherein the photovoltaic cell is light transmissive and is configured such that at least a portion of the solar radiation directed from the solar collector traverses the photovoltaic cell prior to encountering the heat exchanger.

4. The hybrid solar concentration device according to any preceding claim, wherein the solar collector comprises one or more mirror surfaces.

5. The hybrid solar concentration device according to any preceding claim, wherein the solar collector comprises one or more parabolic reflectors.

6. The hybrid solar concentration device according to any preceding claim, wherein the heat exchanger comprises a plurality of light transmissive tubes.

7. The hybrid solar concentration device according to any preceding claim, wherein a gap separates the photovoltaic cell and the heat exchanger sufficient to limit the operating temperature of the photovoltaic cell.

8. The hybrid solar concentration device according to any preceding claim, wherein the gap is variable.

9. The hybrid solar concentration device according to any preceding claim, comprising a plurality of heat exchangers.

10. The hybrid solar concentration device according to any preceding claim, comprising a plurality of photovoltaic cells.

11. A system for generating electric power comprising:
(a) a hybrid solar concentration device according to any one of the preceding claims; and
(b) a work extraction device in fluid communication with the heat exchanger configured to extract work from a heated working fluid.

12. A method of generating electric power comprising:
(a) directing a first energy component of solar radiation from a solar collector to a heat exchanger configured to heat a working fluid and producing a heated working fluid;
(b) directing a second energy component of solar radiation to a photovoltaic cell configured to generate electricity and producing electricity;
(c) conveying the heated working fluid to a work extraction device configured to extract work from the heated working fluid and producing mechanical energy and a spent working fluid; and
(d) recycling the spent working fluid to the heat exchanger.

13. The method according to claim 12, wherein step (a) precedes step (b).

14. The method according to claim 12 or claim 13, further comprising a step (e) removing additional heat from the spent working fluid to produce a second spent working fluid **characterized by** a temperature lower than the temperature of the spent working fluid.

15. A system for generating electric power comprising:
(a) a solar collector comprising a plurality of linear Fresnel reflectors configured to direct solar radiation to a photovoltaic cell and a heat exchanger;
(b) a heat exchanger comprising a plurality of light transmissive tubes configured to heat an organic working fluid with an infrared radiation component of the solar radiation; and
(c) a photovoltaic cell configured to generate DC power from a visible light component of the solar radiation;
(d) an inverter configured to convert the DC power generated by the photovoltaic cell into AC power;
(e) a work extraction device configured to convert work from a heated working fluid produced by the heat exchanger into electric power, and
(f) a heat extraction device configured to extract heat from a spent working fluid, said heat extraction device being in fluid communication with the work extraction device and the heat exchanger;
wherein the system for generating electric power is configured such that both electric power produced by photovoltaic cell and the work extraction device may be delivered to an electric power grid.
